# EUROPEAN PATENT APPLICATION

(11) **EP 2 151 508 A1**
(43) Date of publication of application: **10.02.2010**
(21) Application number: 09010156.9
(22) Date of filing: 06.08.2009
(51) Int. Cl.: C21D 9/30, C21D 1/09, C21D 1/10, C21D 1/42, C21D 9/28, B23P 15/00, F02N 15/00

(54) **Process to manufacture shaft and guide pins as used for planetary systems**

(30) Priority: 07.08.2008 BR 0802944
(71) Applicant: ZEN SA INDUSTRIA METALURGICA, Busque SC (BR)
(72) Inventor: Pessoa, Maicon, Brusque (BR); Peregrina Gomez, Marcelo, Brusque (BR); Maurici, Allan, Brusque (BR)
(74) Representative: Lorente Berges, Ana

(57) **Abstract**

"PROCESS TO MANUFACTURE SHAFT AND GUIDE PINS AS USED FOR PLANETARY SYSTEMS", the present invention refers to the technical field of automotive parts, more specifically to a process to manufacture a shaft (1) and guide pins (2) as used for planetary systems, which purpose is to improve the strength, durability and to reduce the costs of final products.

## Description

The present invention refers to the technical field of automotive parts, more specifically a process to manufacture a shaft and guide pins as used for planetary systems, which purpose is to improve the strength, durability and to reduce the costs of final products.

### Background

The search to reduce the emission level of automotive vehicles has been a constant concern for automakers. One of the alternatives being daily used and improved is to reduce the weight of vehicles, to provide a reduction in fuel consumption and consequent reduction in the level of emissions.

Based on this trend, manufacturers of implements for the electrical system of vehicles have concentrated efforts to reduce the weight/power ratio of components as used in the system.

One of the solutions found was the use of planetary gears reduction systems for starter motors, which provide reduction in measurements and weight of motors, not changing their performance.

The planetary gears system as used for starter motors is constituted by a set of reduction gears, fixed to the shaft by guide pins, to which the sun gear and the crown are attached. The main function of the system is to provide higher available torque at the exit shaft.

### State of the art

Most manufacturers use heat treatment by electromagnetic induction in the shaft manufacturing process, with consequent high cost and low productivity in comparison with the present invention.

### Disclosure of the invention

The present invention uses heat treatment by carburizing, quenching and tempering, thus providing constant hardness throughout the part, presenting the great advantage of a significant reduction in wearing caused at the edge of the shaft, by the friction with reduction gears.

The process as proposed has the object to: improve the resistance and durability of the shaft (1) and guide pins (2) of the planetary system as used in starter motors; provide an increase in productivity, due to the quick process; and reduce the final cost of parts.

### Disclosure of the process

In the present process, guide pins of reduction gearings are previously treated by the carburizing, quenching and tempering. After the treatment, they are grinded and then assembled to the edge of the shaft.

Subsequently, the shaft receives heat treatment by carburizing, quenching and tempering, which provides for constant hardness throughout the part, thus increasing wearing resistance in friction regions between turning parts.

Carburizing is a heat-chemical diffusion treatment which object is to increase the rate of carbon on the part surface. It may be effected in solid, paste, liquid, gaseous or plasma means.

In the process at issue, carburizing is used by gaseous means, thus offering the following advantages:
- to improve the content of carbon and consequently the hardened layer;
- stability of the carburizing mixture during the whole carburizing process;
- to avoid oxidization;
- to allow direct annealing after hardening; and
- quick carbon penetration.

Quenching is a heat treatment consisting in submitting steel to a heat cycle successively comprising:
- heating intended to reach a temperature-stable stage (austenite) by means of transformation and eventual solubilization of other constituents;
- appropriate cooling rate as per the corresponding "S" curve, practiced since that temperature, so-called tempering, up to the treatment of the cooling means.

Tempering is a heat treatment effected over a tempered product, with the object to change it so to grant characteristics of use as desired. This treatment forms a structure which is closer to the state of physical-chemical balance than the one obtained by quenching. These operations as a whole are called "quenching and tempering". We advise the tempering to be made immediately after quenching.

Objects, advantages and further important characteristics of the invention at issue may be more easily understood when read jointly with the attached figure, wherein:

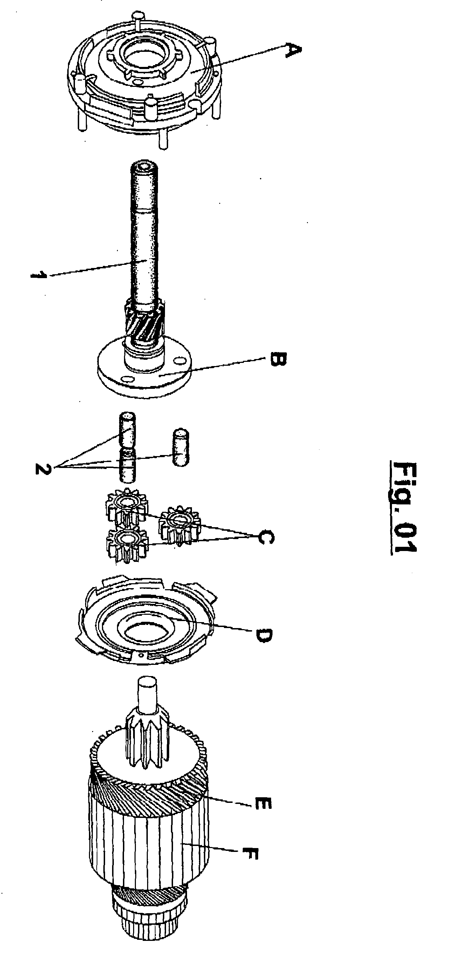

Figure 1 shows an exploded view of the planetary system as used in starter motors.

As we can see from the attached figure showing and integrating the present description of the invention for "Process to Manufacture Shaft and Guide Pins as Used for Planetary Systems", it is comprised by the use of heat treatments of carburizing, quenching and tempering, in a shaft (1) and guide pins (2) of the planetary systems as used for starter motors.

Figure 1 shows an exploded view of the planetary system as used for starter motors, showing the crown (A), the shaft (1), the shaft edge (B), guide pins (2), reducing gears (C), cover (D), sun gear (E) and the armature (F).

## Claims

1. "PROCESS TO MANUFACTURE SHAFT AND GUIDE PINS AS USED FOR PLANETARY SYSTEMS", comprised by the use of heat treatments of carburizing, quenching and tempering, in a shaft (1) and guide pins (1) of the planetary systems as used for starter motors.

2. "PROCESS TO MANUFACTURE SHAFT AND GUIDE PINS AS USED FOR PLANETARY SYSTEMS" of claim 1, **characterized by** the previous heat treatment of the guide pins (2) by means of a carburizing, quenching and tempering process.

3. "PROCESS TO MANUFACTURE SHAFT AND GUIDE PINS AS USED FOR PLANETARY SYSTEMS" of claim 1, **characterized by** the heat treatment by means of carburizing, quenching and tempering of the whole shaft (2), after guide pins (2) are assembled.
